# EUROPEAN PATENT SPECIFICATION

(11) **EP 3 948 504 B1**
(45) Date of publication and mention of the grant of the patent: **19.08.2026**
(21) Application number: 20716336.1
(22) Date of filing: 11.03.2020
(51) Int. Cl.: G06F 3/0482, G06F 40/18

(54) **STRUCTURED DATA JUMP MECHANISM**
STRUKTURIERTER DATENSPRUNGMECHANISMUS
MÉCANISME DE SAUT DE DONNÉES STRUCTURÉES

(30) Priority: 27.03.2019 IN 201941012062; 31.07.2019 US 201916528101
(43) Date of publication of application: 09.02.2022
(73) Proprietor: Hexagon Technology Center GmbH, 9435 Heerbrugg (CH)
(72) Inventor: KUDIRI, Chandra Sekar, Rao, Sullerpeta, Andhra Pradesh 524121 (IN)
(74) Representative: Kaminski Harmann
(86) International application number: PCT/US2020/021961
(87) International publication number: WO 2020/197764

(56) References cited:
- US-A1- 2005 182 766
- US-A1- 2010 146 434
- US-A1- 2016 334 954

## Description

### Related Applications

This application claims priority to Indian provisional patent application number 201941012062, filed March 27, 2019 and titled "Structured Data Jump Mechanism" and naming Chandra Sekar Rao Kudiri as inventor [Attorney Docket No. 37402-17501], and to US non-provisional patent application 16/528,101, filed July 31, 2019 and titled "Structured Data Jump Mechanism" and naming Chandra Sekar Rao Kudiri as inventor [Attorney Docket No. 37402-17503].

### Technical Field

The present disclosure generally relates to computer user interfaces, more particularly, the invention relates to user interfaces for displaying information

### Background Art

Many computer-based documents include structured data. For example, a spreadsheet may have many columns and many rows. Due to limitations on the size of a computer's display screen, however, only a subset of such columns and/or rows may be simultaneously displayed on the computer screen. Thus, some columns and rows can be thought of as being off-screen to the right (or left) of, or above (or below) the columns and rows displayed on-screen at a given point in time.

To view such off-screen columns and rows, a user would commonly move one or more slider bars until the desired columns and rows come on-screen. This typically means that the originally-displayed groups move, most likely off-screen.

Moreover, in order to identify when the desired columns and rows are displayed on-screen, the user must pay attention as columns and rows come onto the screen and scroll by, and then stop the scroll when the desired columns and rows are on-screen. Thus, the slider bar approach consumes both user time and user attention.

US 2010/146434 A1 discloses displaying a data grid on a screen, wherein a first part of a data grid is displayed together with a minimap providing a of a second part of the data grid in a smaller visual representation, and a user may select data portions in the minimap to be displayed in the first part.

### Summary of Various Embodiments

In accordance with an illustrative embodiment, an apparatus for displaying includes a computing processor communicatively coupled to a display screen. The computing processor is configured to display, on the display screen, on-screen structured data from the data grid, as well as a set of jump buttons. Each of the jump buttons is associated with a corresponding set of off-screen structured data from the data grid.

In illustrative embodiments, the computing processor is further configured to display, on the display screen, a jump interface, and to display in the jump interface, at least one jump button from the set of jump buttons. Alternatively, or in addition, wherein the data grid includes a plurality of cells, some embodiments are configured to display, in a cell from the plurality of cells, a jump button from the set of jump buttons.

The apparatus is configured to respond to activation (by a user) of a jump button from the set of jump buttons (which may be referred-to as the "activated" jump button) by displaying, on the display screen, the (previously off-screen) set of structured data associated with the activated jump button.

The apparatus may do so in any of a variety of ways, such as by auto-scrolling data across the display screen until the structured data associated with the activated jump button are displayed on-screen, or by immediately displaying the structured data associated with the activated jump button.

For example, in some embodiments, the set of off-screen structured data corresponding to the activated jump button include a plurality of grouped off-screen data columns, and in some embodiments, the set of off-screen structured data corresponding to the activated jump button includes a plurality of grouped off-screen data rows.

In other illustrative embodiments, the set of on-screen structured data includes a first data column, and also includes a second data column, the second data column separated (in the data grid) from the first data column by a set of intervening columns. In such embodiments, the set of jump buttons includes a given jump button, and the apparatus is configured to: receive activation of the given jump button by a user and in response to said activation, and cause display, on the display screen, of the first data column immediately adjacent to the second data column without the intervening columns.

In yet other illustrative embodiments, the set of on-screen structured data includes a first data row, as well as a second data row, and the second data row is separated (in the data grid) from the first data row by a set of intervening rows. In such embodiments, the set of jump buttons includes a given jump button, and the apparatus is configured to: receive activation of the given jump button by a user and in response to said activation, and cause display, on the display screen, of the first data row immediately adjacent to the second data row without the intervening rows.

Another embodiment discloses a computer-implemented method of displaying, on a display screen, a data grid. The method includes steps of displaying, on the display screen, on-screen structured data from the data grid; as well as a set of jump buttons, each jump button associated with a corresponding set of off-screen structured data from the data grid.

The jump buttons may be displayed in a variety of ways. For example, in some embodiments, the on-screen structured data includes a plurality of cells, and displaying the set of jump buttons includes displaying, in a cell from the plurality of cells, at least one jump button from the set of jump buttons. Other embodiments display, on the display screen, a jump interface, and display, in the jump interface, a jump button from the set of jump buttons.

In response to activation of the jump button, the method displays the (previously off-screen) structured data on-screen.

In some embodiments, the set of jump buttons includes a given jump button, and the set of off-screen structured data corresponding to the given jump button includes a plurality of grouped off-screen data columns, and/or a plurality of grouped off-screen data rows.

In other illustrative embodiments, the set of on-screen structured data includes a first data column, as well as a second data column, the second data column separated in the data grid from the first data column by a set of intervening columns. In such embodiments, the set of jump buttons includes a given jump button, and the method further includes displaying, in response to activation of the given jump button, the first data column immediately adjacent to the second data column without the intervening columns.

In other illustrative embodiments, the set of on-screen structured data includes a first data row, as well as a second data row, the second data row separated in the data grid from the first data row by a set of intervening rows. In such embodiments, the set of jump buttons includes a given jump button, and the method further includes displaying on the display screen, in response to activation of the given jump button, the first data row immediately adjacent to the second data row without the intervening rows.

Yet other embodiments are directed to a tangible, computer-readable storage medium in which is non-transitorily stored program code that, when executed by a computing processor, provides one or more of the methods described above.

### Brief Description of the Drawings

The foregoing features of embodiments will be more readily understood by reference to the following detailed description, taken with reference to the accompanying drawings, in which:
Fig. 1A schematically illustrates a computer having an embodiment of a user interface;
Fig. 1B schematically illustrates a system for providing an embodiment of a user interface;
Fig. 2A schematically illustrates an embodiment of a data grid;
Fig. 2B schematically illustrates a set of jump buttons;
Fig. 2C schematically illustrates an embodiment of a data grid;
Fig. 3A and Fig. 3B schematically illustrate a display screen according to an embodiment of a graphical user interface;
Fig. 3C schematically illustrates an embodiment of a jump interface;
Fig. 3D schematically illustrates another embodiment of a display screen;
Fig. 4A is a flow chart of an embodiment of a method of operating a graphical user interface;
Fig. 4B is a flow chart of an embodiment of a method of defining a jump button;
Fig. 4C schematically illustrates a user interface for defining a jump button;
Fig. 5A and Fig. 5B schematically illustrate a display screen according to another embodiment of a graphical user interface;
Fig. 6A and Fig. 6B schematically illustrate a display screen according to another embodiment of a graphical user interface;
Fig. 6C schematically illustrates an embodiment of a row jump interface;
Fig. 7A and Fig. 7B schematically illustrate a display screen according to another embodiment of a graphical user interface;
Fig. 8A and Fig. 8B schematically illustrate a display screen according to another embodiment of a graphical user interface;
Fig. 9 schematically illustrates another embodiment of a jump button interface.

### Detailed Description of Specific Embodiments

Various embodiments improve user to access data on a system by allowing data access more quickly than, and with less effort than required for, prior art methods and systems. For example, illustrative embodiments include a set of on-screen jump buttons, each associated with a corresponding set of off-screen data. When a user activates a jump button, the corresponding set of off-screen data is displayed on-screen. In other words, the method or system moves the corresponding set of off-screen data associated with the activated jump button from its off-screen location to on-screen, so that it is visible to the user without requiring the use to manually scroll through the data. The corresponding set of off-screen data may be, for example, one or more columns of data in a table or spreadsheet, or one or more rows of data in a table or spreadsheet.

Definitions. As used in this description and the accompanying claims, the following terms shall have the meanings indicated, unless the context otherwise requires.

A "set" includes at least one member. For example, a set of columns includes at least one column, and a set of rows includes at least one row.

A "data grid" is a matrix of data including at least one column and a plurality of rows, or at least one row and a plurality of columns, or a plurality of columns and a plurality of rows.

The term "structured data" is an ordered set of data. Non-limiting examples of structured data include a column having a plurality of rows of data in a table of a word processing document, a column having a plurality of rows of data in spreadsheet; a row having a plurality of columns of data in a table of a word processing document, and a row having a plurality of columns of data in spreadsheet.

The term "off-screen data" is structured data not presently displayed on a display screen.

The term "on-screen data" is structured data presently displayed on a display screen.

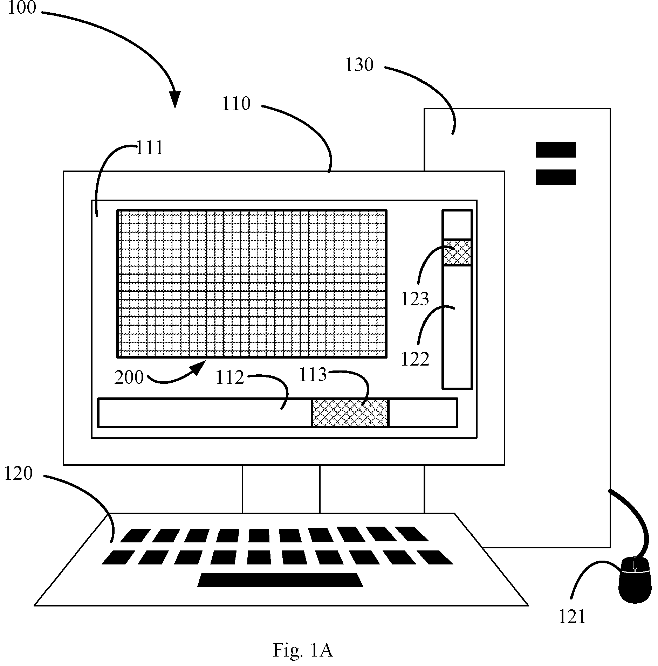

Fig. 1A schematically illustrates a computer system 100 according to an illustrative embodiment. The computer system 100 includes a housing in which are the computer's computer processor and memory, among other components as known in the art. The computer system 100 also includes a monitor 110 having a display screen 111, and keyboard 120 and a mouse 121. In some embodiments, the display screen 111 is a touch screen.

In illustrative embodiments, the display screen 111 displays a data grid 200, along with a horizontal scroll bar 112 (with slider 113) and vertical scroll bar 122 (with slider 123). Any of the embodiments described herein may include, on the display screen 111 simultaneously with a data grid 200 or a portion of a data grid 200, one or both of a horizontal scroll bar 112 and vertical scroll bar 122.

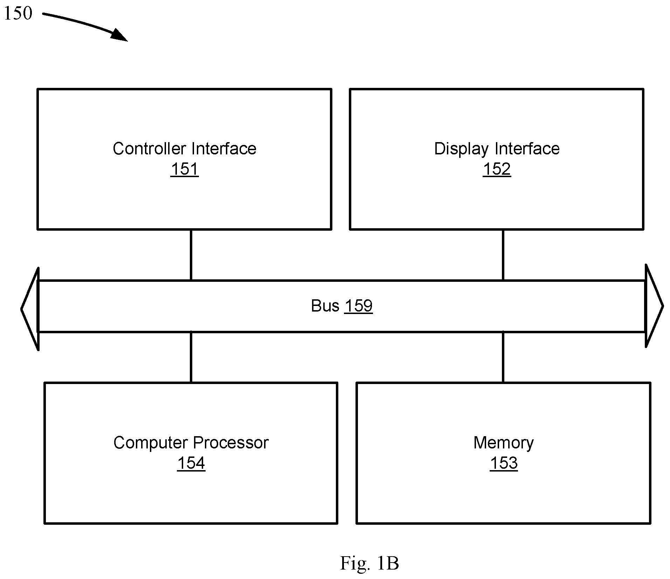

Fig. 1B schematically illustrates a system 150 according to an illustrative embodiment. The system 150 includes several components in communication with one another over a bus 159. The system 150 may, in some embodiments, be implemented on a computer, such as a computer within the housing 130.

The controller interface module 151 receives, from peripheral devices such as a keyboard 120, a touch screen 111, and/or a mouse 121, inputs made by a user. The display interface 152 controls the output of a graphical user interface on a monitor 110.

The system 150 also includes a computer processor 154, as known in the art of microprocessors. The memory 153 may be a read only memory (RAM), or a tangible, computer-readable storage medium in which is non-transitorily stored (1) program code that, when executed by a computer processor, provides a method of displaying, on a display screen, a graphical user interface (GUI) of a software application, and/or (2) data, such as data populating a data grid 200.

### Overview

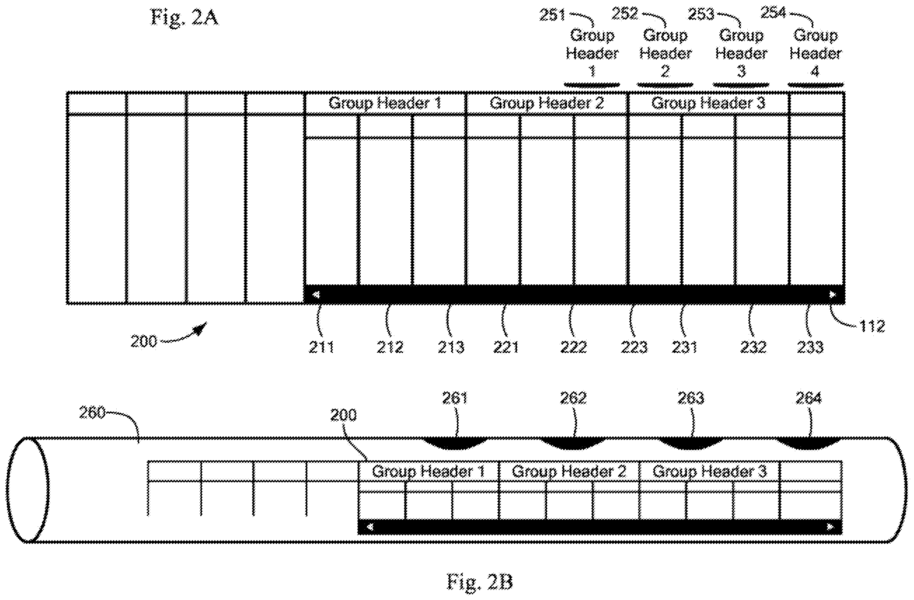

Fig. 2A schematically illustrates an embodiment of a data grid 200. The data grid 200 may be a spreadsheet in a spreadsheet program, such as Microsoft Excel, or Calc in the LibreOffice suite, or may be a table in a word processing document such as produced in Word by Microsoft, or Writer in in the LibreOffice suite, to name but a few non-limiting examples.

The data grid 200 includes several columns, numbered 211, 212, 213, 221, 222, 223, and 231, 232, 233. Moreover, in this embodiment, the columns are grouped into three groupings. Columns 211, 212 and 213 are grouped under a header "Group Header 1," columns 221, 222 and 223 are grouped under a header "Group Header 2," and columns 231, 232 and 233 are grouped under a header "Group Header 3." Groups of columns may be created (i.e., columns may be grouped), and in some embodiments modified, by a system developer or a user.

The data grid 200 also has several related jump buttons 251, 252, 253 and 254, labeled "GroupHeader 1," "GroupHeader 2," "GroupHeader 3," and GroupHeader 4," respectively. Jump buttons 251, 252 and 253 correspond, respectively, to one of the groups of columns.

In use, the data grid 200 may include more columns than can be displayed simultaneously on a computer screen. To view such an off-screen set of columns, a user would commonly move a slider 113 in slider bar 112 until the desired group comes on-screen. This necessarily means that the originally-displayed groups move, most likely off-screen. In order to identify when the desired group is displayed on-screen, the user must pay attention as groups come onto the screen and scroll by, and stop the scroll bar when the desired group is on-screen. Thus, the slider bar approach consumes both user time and user attention.

In this example, jump button 254 corresponds to a column or group of columns not visible in Fig. 2A. As explained in connection with various embodiments disclosed herein, a jump button provides a simple and intuitive way for a user to bring such "off-screen" columns onto the screen 111 so that they are visible as "on-screen" columns. For example, when a user activates jump button 254, the column or group of columns associated with jump button 254 are brought onto the screen 111.

Fig. 2B schematically illustrates jump buttons in a conceptual way by analogy to a simple musical instrument - a flute or recorder 260. Such a flute 260 has a body having a plurality of tone holes (or "finger holes) 261, 262, 263 and 264. As known in the musical arts, placing a finger over a tone hole changes the sound produced by the flute 260. Similarly, uncovering such a tone hole by removing a finger also changes the sound produced by the flute 260. Similar to using tone holes 261-264, a user of embodiments described herein may access structured data in a grid 200 by activating one or more jump buttons 251-254. As described below, selection of a jump button triggers the system 100 to bring the data associated with that jump button from off-screen to to-onscreen.

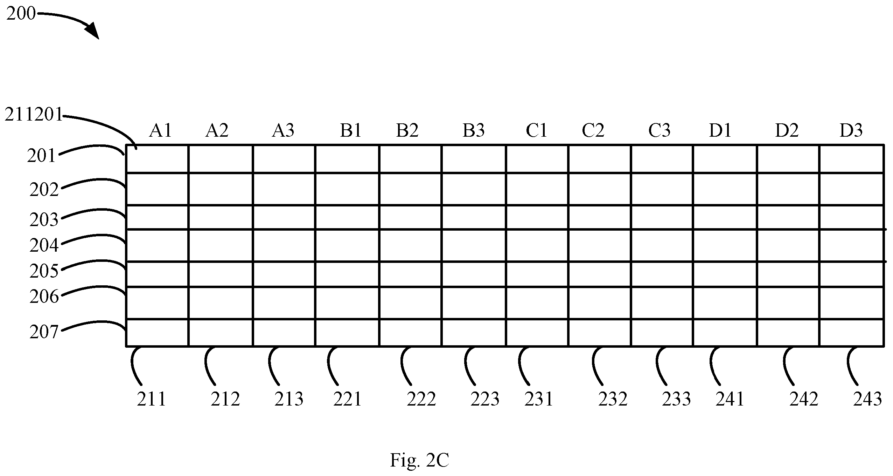

Fig. 2C schematically illustrates another embodiment of a data grid 200. The data grid 200 in Fig. 2C includes a plurality of columns (211-213; 221-223; 231-233; and 241-243) and a plurality of rows (201-207). In the example of Fig. 2C, columns 211, 212 and 213 may (but are not required to be) grouped, in this example in Group A, as signified by individual column headers beginning with "A" (i.e., A1, A2 and A3). Similarly, columns 221, 222 and 223 may (but are not required to be) grouped, in this example in Group B, as signified by individual column headers beginning with "B" (i.e., B1, B2 and B3). In similar fashion, columns 231, 232 and 233 may (but are not required to be) grouped, in this example in Group C, as signified by individual column headers beginning with "C" (i.e., C1, C2 and C3), and columns 241, 242 and 243 may (but are not required to be) grouped, in this example in Group D, as signified by individual column headers beginning with "D" (i.e., D1, D2 and D3).

Each intersection of a column and a row defines a cell in the data grid 200. For example, the intersection of column 211 and row 201 defines a cell 211201. Each cell may hold data or a datum, such as text and/or numerical data, and/or a mathematical formula, to name but a few examples. In illustrative embodiments, the data in a cell is editable by a user, but in other embodiments the data in a cell is fixed (i.e., not editable by the user), and is calculated as a result of an evaluation of a formula, to name but a few examples.

Based on the foregoing, and other embodiments described herein, it will be understood that the system 100 is an apparatus for displaying a data grid 200, and that the apparatus includes a computing processor communicatively coupled to a display screen. The computing processor configured to display, on the display screen, on-screen structured data from the data grid, along with a set of jump buttons. Each of the jump buttons associated with a corresponding set of off-screen structured data from the data grid. The system 100 responds to activation of jump button (which may be referred-to as the "activated jump button) displaying, on the display screen, the set of structured data associated with the activated jump button.

### A column-based embodiment

In illustrative embodiments, the system 100 displays ("on-screen") structured data on the display screen 111. The on-screen structured data is part of a larger data grid 200 that also includes off-screen structured data.

The system 100 also defines, on the display screen 111, a set of column jump buttons 311-313 for each of a set of corresponding columns in a spreadsheet, and particularly for columns that are presently "off-screen" (i.e., not presently displayed on the screen). Such operation of the system 100 may be described as providing a graphical user interface ("GUI").

Each button 311-313 has a label 321-323, respectively, that identifies, to the user, the column (or group of columns) with which the jump button is associated. In preferred embodiments, multiple jump buttons are displayed in a jump button array 310 above the spreadsheet, such as in a linear set, box, or other grouping.

In some embodiments, the displayed column (i.e., the column associated with the jump button that the user activated) is surrounded by the columns that are already its neighbors in the spreadsheet. Thus, this concept is not like a tabbed display (in which information associated with one tab disappears when it is overwritten when another tab is selected). Also, in some embodiments, the display still includes one or more scroll bars (e.g., horizontal scroll bar 112 and/or vertical scroll bar 122), so after jumping or auto-scrolling to the desired group, the user can scroll further in any direction using the one or more scroll bars.

Sometimes a user (or the system designer) may group the columns, and give a name to each group (a "group header"). In such embodiments, a jump button may be associated with such a group, so that activation of the jump button causes display of the group.

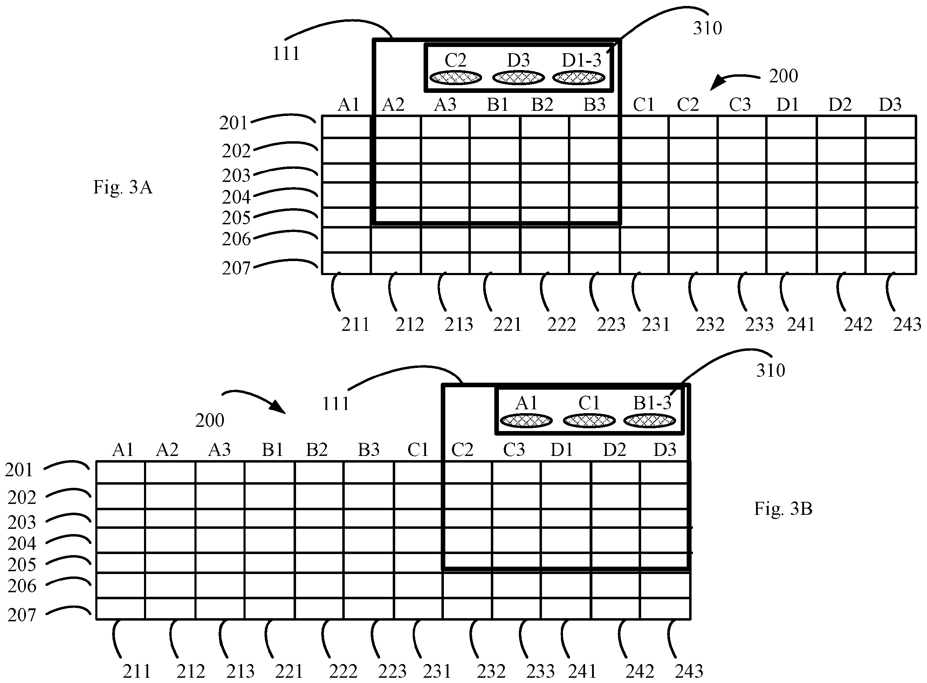

Fig. 3A schematically illustrates a portion of the data grid 200 displayed on a display screen 111. As shown, only a subset of the columns is displayed, because the display screen 111 is simply not large enough to display all of the columns. Specifically, in Fig. 3A, only columns 212, 213, 221, 222, and 223 are displayed on-screen, and columns 221, 231, 232, 233, 241, 242 and 243 are " off-screen." In other words, the user can see, on the display screen, columns 212, 213, 221, 222, and 223, but cannot see columns 221, 231, 232, 233, 241, 242 and 243.

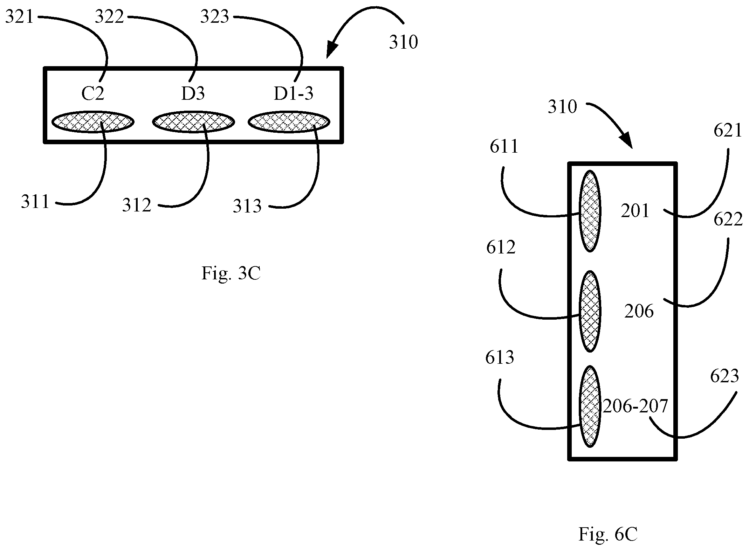

The embodiment of Fig. 3A also includes a jump interface 310, which is also schematically illustrated in Fig. 3C. The jump interface 310 includes a set of jump buttons, in this example, jump buttons 311, 322 and 313. Each jump button is associated with a column, or a group of columns. Such column or groups of columns may be referred to as the "associated column" or "associate group," respectively. For example, in Fig. 3A, jump button 313 is associated with the (group of) columns 241-243, which are labeled "D1," "D2," and "D3" respectively.

In preferred embodiments, the jump interface 310 also includes a set of button labels 321, 322 and 323 associated, respectively, with the jump buttons 311, 312 and 312. Each label includes text and/or a graphic that identifies to the use the column or groups of columns associated with the jump button. For example, as schematically illustrated in Fig. 3C, label 321 is associated with jump button 311 and indicates that jump button 311 is associated with the column labeled "C2" (i.e., column 232). In preferred embodiments, each such label 321, 322 and 323 is user-editable, in that it may be edited by the user to assign text or a symbol that is meaningful to the user. For example, if the cells of column 232 include sales data, the user may edit the label 321 to read "sales data" or "$$$."

When a user activates button 313, the display screen 111 displays at least columns 241-243. A user may activate a button by, for example, clicking on the button with a computer mouse, or by pressing a key set on the keyboard, or by other actions as known in the art, to name but a few examples.

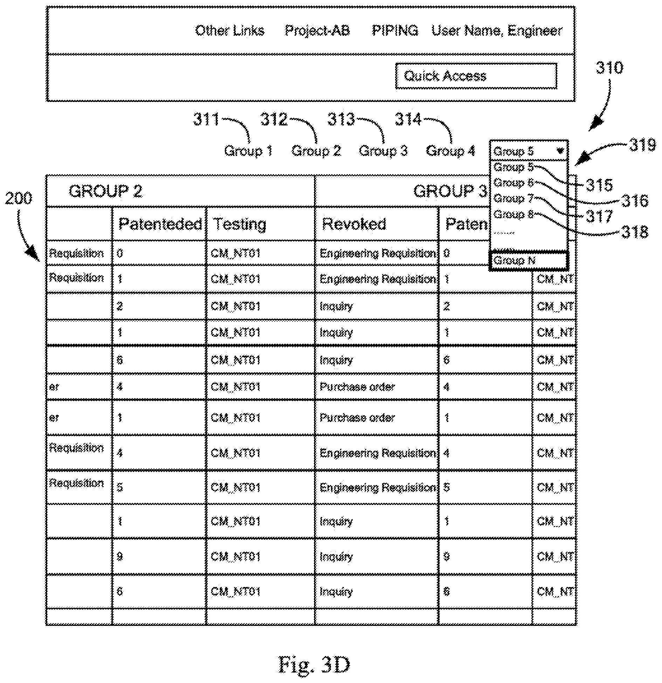

Another embodiment of a jump interface 310 is schematically illustrated in Fig. 3D, in connection with a partial representation of a data grid 200 displayed on a display screen 111. This embodiment includes an array having several jump buttons 311, 312, 313 and 314, as well as a drop-down menu 319 displaying additional jump buttons 315, 316, 317 and 318, although other embodiments include a drop-down menu 319 without an array such as the array of jump buttons 311, 312, 313 and 314. An embodiment with a drop-down menu may be useful in situations for which space on the display screen 111 is insufficient to display all of the jump buttons (311-318) without overcrowding or making the jump buttons so small as to impede their usefulness, because the drop-down menu 319 allows a user easy and convenient access to jump buttons 315, 316, 317 and 318 without having to keep those jump buttons 315, 316, 317 and 318 on-screen.

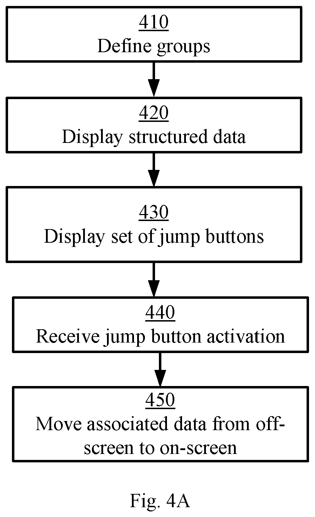

Fig. 4A is a flow chart illustrating an embodiment of the operation of a jump button. At step 410, in some embodiments a user, or the system designer, defines groups of structured data, e.g., groups of columns and/or groups of rows and/or groups of cells (e.g., each group of cells may be a "sub matrix"). The availability of step 410 does not require that all embodiments allow a user, or system designer, to define groups of structured data. Some embodiments operate on individual rows and/or individual columns. Moreover, illustrative embodiments allow a user to change groups of structured data, for example to add or subtract a set of columns from an existing group of columns, and/or to add or subtract a set of rows from an existing group of rows, and/or to add or subtract a set of cells from a sub-matrix.

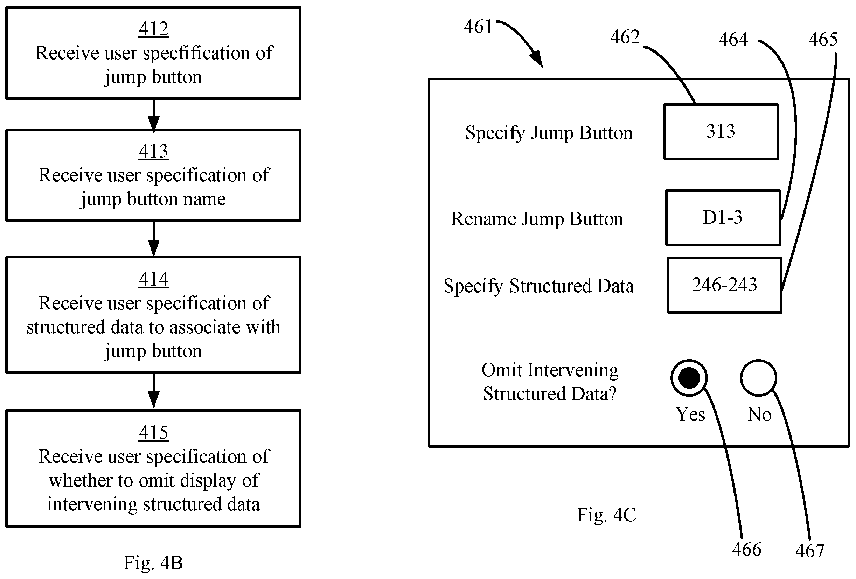

Fig. 4B is a flow chart of a method of defining a jump button, and Fig. 4C schematically illustrates a user interface 461 configured to allow a user to define a jump button, using jump button 313 as an illustrative example. The user interface 461 is configured to receive, from the user, inputs to define various aspects of the jump button. In illustrative embodiments, the user interface 461 may be a pop-up window, or a drop-down menu, to name but a few examples. Accordingly, the system 100 may be configured to receive user input defining a jump button.

The user interface 461 includes a button receiver 462 to receive the user's specification of the jump button that the user desires to define (step 412). The button receiver 462 may be, for example, a box in which the user enters text to specify the desired jump button, or a drop-down menu from which the user selects the desired jump button, to name but a few examples. In this illustrative example, the button receiver 462 has received from the user the specification of jump button 313.

Some embodiments of the user interface 461 also include a rename receiver 464 to receive the user's specification of the name of the specified jump button (step 413). The rename receiver 464 may be, for example, a box in which the user enters text to specify the desired name, or a drop-down menu from which the user selects the desired name, to name but a few examples. In this illustrative example, the rename receiver 464 has received from the user the specification of the name of the specified jump button 313 as "D1-3."

The user interface 461 includes a data specification receiver 465 to receive the user's specification of the structured data to be associated with the specified jump button (step 414). The data specification receiver 465 may be, for example, a box in which the user enters text to specify the desired structured data, or a drop-down menu from which the user selects the desired structured data, to name but a few examples. In general, a user or developer may define specify, from the data grid 200, any number of columns, or any number of rows, or a sub-matrix of any size, as the structured data to be associated with the specified jump button, possibly limited only by the size of the data grid 200 and/or the size of the display screen 111.

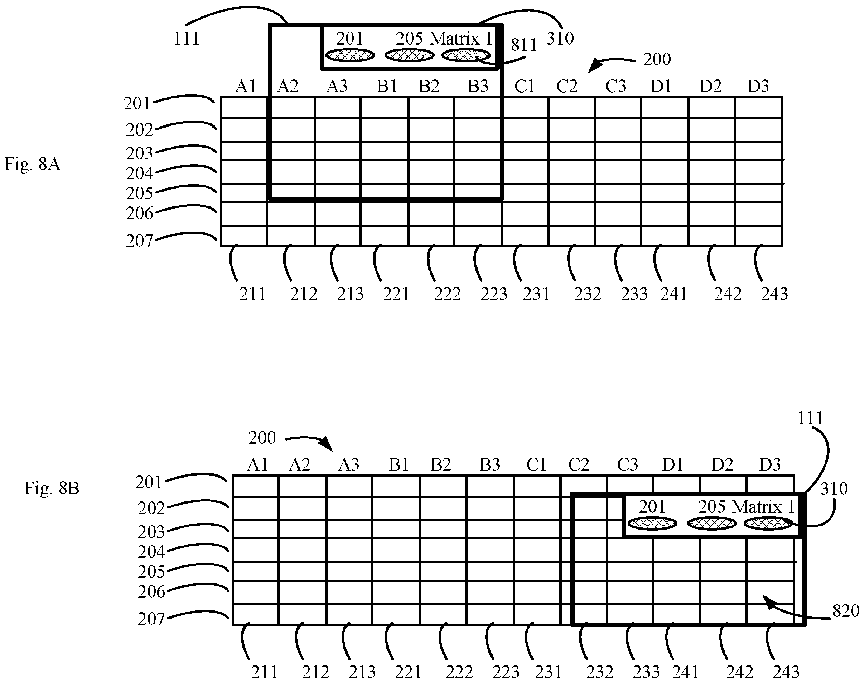

In this illustrative example, the data specification receiver 465 has received from the user the specification of columns 241-243, however the embodiments are not limited to receiving only columns, or only consecutive columns, as the user's specification of the structured data to be associated with the specified jump button. For example, illustrative embodiments may also accept, as the user's specification of the structured data to be associated with the specified jump button, a single column, a group of columns, a set of non-consecutive columns (e.g., columns separated by one or more intervening columns), a single row, a group of rows, or a set of non-consecutive rows (e.g., rows separated by one or more intervening rows), and/or a specification of a sub-matrix of cells (e.g., sub-matrix 820 as illustrated in Fig. 8B).

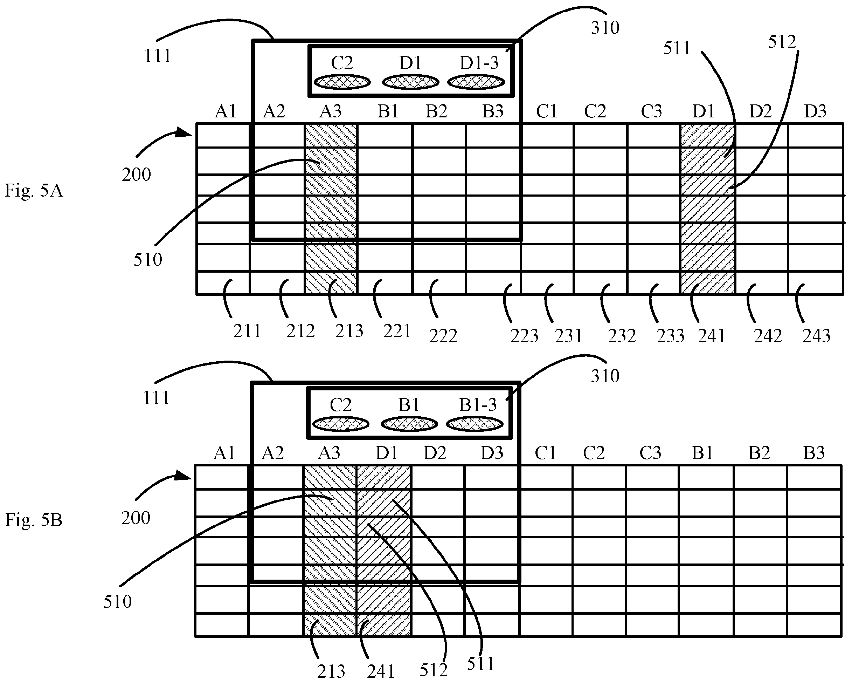

It should be noted that in illustrative embodiments, a user's specification of a plurality of non-consecutive columns may include a plurality of columns in which each of the specified columns is separated from its nearest specified neighboring column by one or more intervening columns. For example, a user may specify column 213 and column 241, which are separated by intervening columns 221 - 223, and 231-233, as well as column 243 which is separated from specified column 241 by intervening column 242. Display of those specified columns may omit those intervening columns, as described in connection with Fig. 4B and Figs. 5A and 5B.

It should also be noted that in illustrative embodiments, a user's specification of a plurality of non-consecutive rows may include a plurality of rows in which each of the specified rows is separated from its nearest specified neighboring row by one or more intervening rows. For example, a user may specify row 204 and row 206, which are separated by intervening row 205, as well as row 202 which is separated from specified row 204 by intervening row 203. Display of those specified rows may omit those intervening rows.

Some embodiments of the user interface 461 also include radio buttons 466 and 467 to receive the user's specification (step 415) of whether the system 100 should, in response to selection of the specified jump button, omit intervening structured data (e.g., intervening columns or row) when displaying on the screen the structured data associated with the specified jump button. Some embodiments may include only one such button, which toggles between "yes" and "no" in response to user input.

At step 420, the system 100 displays structured data on the display screen 111. As explained in various examples described herein, the structured data may be a portion of a data grid 200, for example.

At step 430, the system 100 displays a set of jump buttons on the display screen. In preferred embodiments, the system 100 displays the set of jump buttons on the display screen 111 at the same time (e.g., simultaneously or concurrently with) as it displays the structured data in step 420.

At step 440, the system 100 receives from the user a button activation of a jump button from the set of jump buttons.

At step 450, the system 100 moves the associated column or group of columns from "off-screen" to "on-screen." Unlike the prior art, in which a user might have used a scroll bar 112 to move the data grid from right to left until columns 241-243 came onto the screen, use of the jump button 313 causes the display screen 111 to display columns 241-243 automatically, without requiring the user to observe intervening columns (e.g., column 231, "C1") scroll onto the screen 111 in order to stop the user's manipulation of the scroll bar 112 just at the right time and place to display columns 241-243.

Illustrative embodiments display columns 241-243 on the display screen immediately in response to activation of the jump button 313. Such embodiments provide to the user an immediate reaction. When the user activates a jump button, illustrative embodiments display the associated column (or group of columns).

Other embodiments perform an "automatic scroll" (or "auto-scroll") in which the data grid 200 scrolls across the screen 111 until the associated column or group of columns are displayed on-screen. From the perspective of the user, the display of the data grid 200 during an automatic scroll is similar to the display of the data grid 200 during a manual scroll using a scroll bar 112 or 122, but is easier and more convenient for the user because it does not require user manipulation of a scroll bar 112 or 122, and user attention during the scroll in order to stop the scroll at the appropriate point (i.e., when the associated columns appear on-screen). Moreover, auto-scroll is beneficial to the user in that it provides to the user a sense of continuity and context of the data.

In some circumstances, a user may desire to view a column immediately adjacent to another column, even though those columns are not immediately adjacent to one another in the data grid 200. Such a circumstance may arise, for example, when the columns that the user desired to view are separated by one or more intervening columns.

As an illustrative example from Fig. 5A, a cell 510 in on-screen column 213 may include a formula that sums the content of two cells 511 and 512 in off-screen column 241. The content of cells 511 and 512 may be described as operands of the formula in cell 510. While the on-screen cell 510 in column 213 displays that sum, the user may desire to view the operands in the two off-screen cells 511 and 512 in column 241. However, as illustrated, it is not possible to see both column 213 and column 241 on-screen simultaneously due to the size of the display screen 111 and the intervening columns.

Consequently, some embodiments display, in response to the user's activation of a jump button, a plurality of columns without displaying intervening columns between that plurality of columns.

Fig. 5A and Fig. 5B schematically illustrate such an embodiment. In this embodiment, the system 100 displays, adjacent to one another, two columns that are separated in the data grid 200 by one or more intervening columns. For example, in Fig. 5A, column 213 (labeled "A3") is separated from column 241 (labeled "D1") by intervening columns 221 ("B1"), 222 ("B2"), 223 ("B3"), 231 ("C1"), 232 ("C2") and 233 ("C3").

In Fig. 5A, column 213 may be referred to as the "anchor" column because, as described in this example, column 213 is on-screen before the user activates the jump button labeled "D1," and remains on-screen after the user activates that jump button. When the user activates the jump button labeled "D1," the system 100 brings column 241 from off-screen to on-screen, and displays column 241 simultaneously with, and immediately adjacent to, column 213. As such, the user can simultaneously view both columns 213 and 241 and, in keeping with the foregoing example, can simultaneously view cell 510, cell 511 and cell 512.

### A row-based embodiment

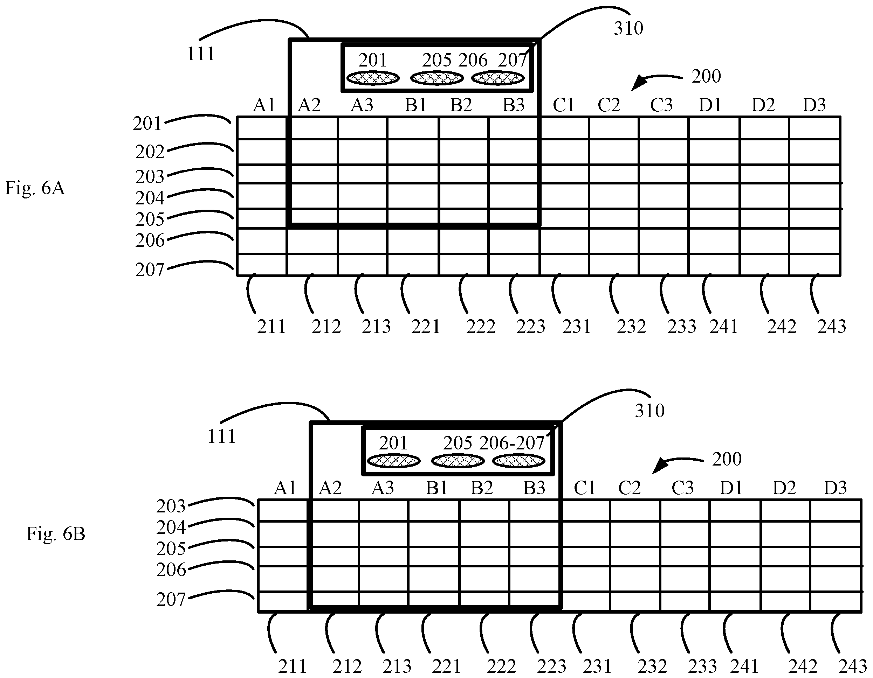

Fig. 6A schematically illustrates a portion of the data grid 200 displayed on a display screen 111. As shown, only a subset of the rows is displayed, because the display screen 111 is simply not large enough to display all of the rows. Specifically, in Fig. 6A, only rows 201-205 are displayed on-screen, and rows 206 and 207 are "off-screen." In other words, the user can see, on the display screen, rows 201-205, but cannot see rows 206 and 207.

The embodiment of Fig. 6A also includes a jump interface 310, which is also schematically illustrated in Fig. 6C. The jump interface 310 includes a set of jump buttons, in this example, jump buttons 611, 622 and 613. Each jump button is associated with a row, or a group of rows. Such rows or groups of rows may be referred to as the "associated row" or "associate row group," respectively. For example, in Fig. 6A, jump button 613 is associated with the (group of) rows 206-207.

When a user activates button 613, the display screen 111 displays at least rows 206 and 207, as illustrated in Fig. 6B. The process here is illustrated by Fig. 4A, with rows as the structured data.

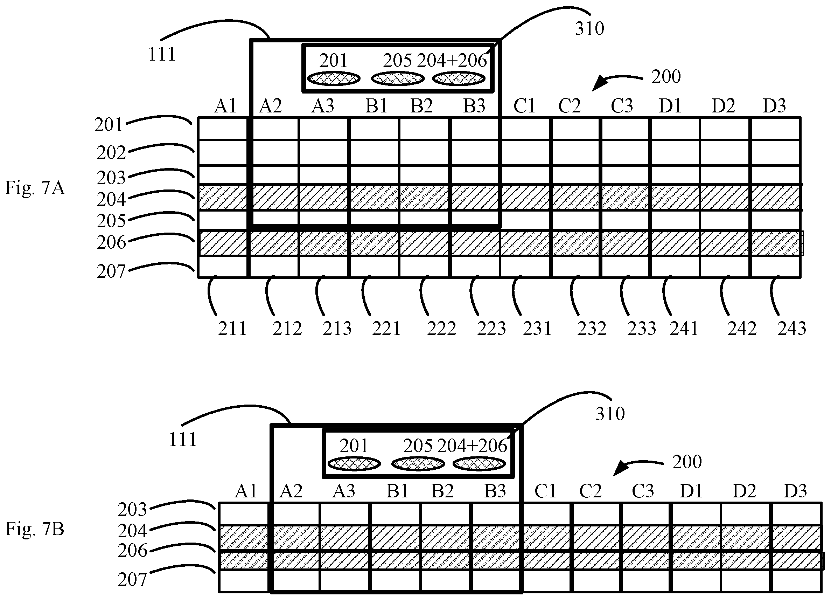

Fig. 7A and Fig. 7B schematically illustrate another embodiment. In this embodiment, the system 100 displays rows 204 and 206 adjacent to one another, even though those two rows are, in the data grid 200, separated by one or more intervening rows. For example, in Fig. 7A, row 204 is separated from row 206 by intervening row 205. In some circumstances, however, a user may desire to view row 204 immediately adjacent to row 206. For example, the cells of row 204 may include data that is relevant to the data in corresponding cells of row 206, and the user may find it beneficial to view those rows on-screen without the intervening rows. Indeed, depending on the size of the screen 111 and the number of intervening rows, it may not even be possible to see both row 204 and row 206 on-screen simultaneously with the intervening row or rows. For example, in Fig. 7A, row 204 is on-screen, but row 206 is off-screen.

Consequently, in response to activation of a jump button by a user, some embodiments display associated rows on-screen without displaying intervening rows between those associated rows. In Fig. 7A, row 204 may be referred to as the "anchor" row because, as described in this example, row 204 is on-screen before the user activates the jump button labeled "204+206" and remains on-screen after activation of that jump button. When the user activates the jump button labeled "204+206," the system 100 brings row 206 from off-screen to on-screen, and displays row 206 simultaneously with, and immediately adjacent to, row 204.

### A sub-matrix-based embodiment

In some situations, a user may desire to view off-screen data that is offset from the present on-screen data in both horizontal and vertical directions. Using scroll bars (112 and 122) to manipulate a data grid is difficult because without displaying the desired row, the user cannot tell how far to move the horizontal slider 112 to reach the desired column, yet without displaying the desired column, the user cannot tell how far to move the vertical slider 123 to display the desired row.

To address that problem, some embodiments include a set of jump buttons, at least one of which, when activated by a user, causes the system to display a pre-specified sub-matrix of data. To that end, Fig. 8A and Fig. 8B schematically illustrate a display screen according to another embodiment of a graphical user interface. In this embodiment, a jump button, such as jump button 811 in jump interface 310, is associated with a sub-matrix 820 of cells in a data grid 200. For illustrative purposes, that sub-matrix 820 may be known as "Matrix 1," and the jump button 811 may be labeled accordingly. In Fig. 8A, the jump button 811 is associated with off-screen sub-matrix 820. When a user activates the jump button 811, the sub-matrix 820 is brought onto, and displayed on, the display screen 111. That action is, in effect, a two-dimensional move in that its shifts both rows and columns of the data grid 200.

### A cell-based jump button

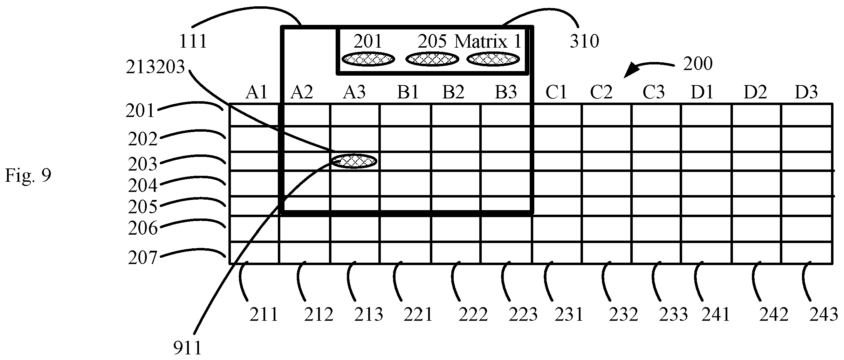

Fig. 9 schematically illustrates another embodiment of a jump button interface. The data grid 200 includes a plurality of cells, each cell defined at the intersection of a column and a row. This embodiment includes a jump button 911 in cell 213203. A jump button 911 disposed in a cell may be referred-to as a cell-based jump button.

Disposing a jump button 911 in a cell, as in Fig. 9, places the jump button 911 in a location where it is on-screen when it is most likely to be useful to the user. For example, a jump button may be disposed in a cell that also includes a formula, and activation of the jump button causes the display screen 111 to show the cell or cells that provide one or more operands as input data that formula. Some embodiments display a cell-based jump button 911 in addition to a jump interface 310, which may be any of the interfaces described above. Other embodiments display a jump button 310 without also displaying a interface 310.

Although embodiments described above are illustrated as column-based, row based, and sub-matrix based, that does not limit the inventive concepts disclosed herein. Any embodiment may include jump buttons that implement column-based jumps, and/or row-based jumps, and/or sub-matrix-based jumps.

As disclosed above, some embodiments are directed to an apparatus for displaying a data grid. In an illustrative embodiment the apparatus includes a computing processor 154 communicatively coupled to a display screen. The computer processor 154 is configured to display, on the display screen 111, on-screen structured data from the data grid 200, and a set of jump buttons. Each such jump button is associated with a corresponding set of off-screen structured data from the data grid. In operation, the apparatus responds to activation (by a user) of a jump button from the set of jump buttons (which button may be referred-to as the "activated" jump button) by displaying, on the display screen 111, the (previously off-screen) set of structured data associated with the activated jump button.

Moreover, some embodiments are directed to a computer-implemented method of displaying, on a display screen, a data grid. An illustrative embodiment of such a method includes steps of displaying, on the display screen 111, on-screen structured data from the data grid 200, and displaying, on the display screen 111, a set of jump buttons. Each jump button in the set of jump buttons is associated with a corresponding set of off-screen structured data. In response to activation of the jump button, the method displays the (previously off-screen) structured data on-screen 111.

Other embodiments are directed to a tangible, computer-readable storage medium in which is non-transitorily stored program code that, when executed by a computing processor, provides a method of displaying, on a display screen, a data grid, as described above.

As described above, various embodiments improve the display of data on a computer screen by enabling a user to access data quickly, with less effort than required for prior art methods and systems. Unlike the prior art, a jump button allows a user to quickly and accurately bring to the user's screen the data that the user desires, without requiring the user to continuously manipulate a scroll bar and watch as data scrolls by until the desired data appears. Moreover, some embodiments also change the relationship of two or more sets of data, for example by displaying two columns (or rows) without displaying intervening columns (or rows) between them, so that the two columns (or rows) appear immediately adjacent to one another, thereby facilitating easy viewing and comparison of their data.

Consequently, the jump buttons and jump interfaces described herein provide a simply, intuitive and practical way of facilitating access to and view of data by a user.

The following is a list of certain reference numbers used in this document.
100: Computer;
110: Computer monitor;
111: Display screen;
112: Horizontal scroll bar;
123: Vertical scroll bar;
120: Keyboard;
121: Mouse;
130: Housing (or CPU);
150: System;
151: Controller interface;
152: Display interface;
153: Memory;
154: Computer processor;
159: Bus;
160: Flute (e.g., recorder)
161: First tone hole;
162: Second tone hole;
163: Third tone hole;
164: Fourth tone hole;
200: Data grid;
201-207: Rows
211-213; 221-223; 231-233; 241-243: Columns;
310: Jump interface;
311-318: Column jump buttons;
319: Drop-down jump button menu;
321-323: Column button labels;
461: Jump button definition interface;
462: Jump button specification receiver;
464: Jump button rename receiver;
465: Jump button structured data specification receiver;
466 and 467: Intervening data omission control receivers;
611-613: Row jump buttons;
621-623: Row button labels;
811: Sub-matrix jump button;
820: Sub-matrix;
911: Cell-based jump button.

Various embodiments may be characterized by the potential claims listed in the paragraphs following this paragraph (and before the actual claims provided at the end of this application). These potential claims form a part of the written description of this application. Accordingly, subject matter of the following potential claims may be presented as actual claims in later proceedings involving this application or any application claiming priority based on this application. Inclusion of such potential claims should not be construed to mean that the actual claims do not cover the subject matter of the potential claims. Thus, a decision to not present these potential claims in later proceedings should not be construed as a donation of the subject matter to the public.

Without limitation, potential subject matter that may be claimed (prefaced with the letter "P" so as to avoid confusion with the actual claims presented below) includes:
P1. A computer-implemented method of defining a jump button on a system having a display screen, comprising:
   receiving, from a user (or a developer), specification of a jump button to be defined (the specified jump button);
   receiving, from the user (or the developer), specification of structured data (the specified structured data) to be associated with the specified jump button;
   associating the specified structured data with the specified jump button, so that upon later activation of the specified jump button, the system displays on the display screen the specified structured data.
P2. The computer-implemented method of P1, further comprising: receiving from the user (or the developer) specification of a name (the specified name) for the specified jump button, and associating the specified name with the specified jump button, and displaying the specified jump button with the specified name.
P3. The computer-implemented method of P1 or P2, further comprising: receiving, from a user (or a developer), specification of whether to omit intervening columns and/or rows when displaying on the display screen the specified structured data.

Various embodiments of the invention may be implemented at least in part in any conventional computer programming language. For example, some embodiments may be implemented in a procedural programming language (*e.g.,* "C"), or in an object-oriented programming language (*e.g.*, "C++"). Other embodiments of the invention may be implemented as preprogrammed hardware elements (*e.g.,* application specific integrated circuits, FPGAs, and digital signal processors), or other related components.

In an alternative embodiment, the disclosed apparatus and methods may be implemented as a computer program product for use with a computer system. Such implementation may include a series of computer instructions fixed either on a tangible medium, such as a non-transient computer readable medium (*e.g.,* a diskette, CD-ROM, ROM, FLASH memory, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (*e.g.,* shrink wrapped software), preloaded with a computer system (*e.g.,* on system ROM or fixed disk), or distributed from a server or electronic bulletin board over the network (*e.g.,* the Internet or World Wide Web). Of course, some embodiments of the invention may be implemented as a combination of both software (*e.g.,* a computer program product) and hardware. Still other embodiments of the invention are implemented as entirely hardware, or entirely software.

The embodiments of the invention described above are intended to be merely exemplary; numerous variations and modifications will be apparent to those skilled in the art. All such variations and modifications are intended to be within the scope of the present invention as defined in any appended claims.

## Claims

1. An apparatus for displaying a data grid (200), the apparatus comprising a computing processor (154) communicatively coupled to a display screen (111), the computing processor (154) configured to:
receive (412, 414), from a user, at a user interface (461),
inputs to define aspects of a jump button, including specification of the jump button, and
the user's specification of structured data to be associated with the specified jump button;
display (420), on the display screen (111), on-screen structured data from the data grid (200);
display (430) a set of jump buttons (311-318, 611-613, 811, 911), each jump button associated with a corresponding set of off-screen structured data from the data grid (200); and
respond to activation by a user of a jump button (activated jump button) from the set of jump buttons (311-318, 611-613, 811, 911) by displaying, on the display screen, the set of structured data associated with the activated jump button.

2. The apparatus of claim 1, wherein the set of off-screen structured data corresponding to the activated jump button comprises:
a plurality of grouped off-screen data columns (211-213, 221-223, 231-233, 241-243); and/or
a plurality of grouped off-screen data rows (201-207).

3. The apparatus of claim 1, wherein:
the set of on-screen structured data includes a first data column;
the set of off-screen structured data includes a second data column, the second data column separated, in the data grid (200), from the first data column by a set of intervening columns, and
the set of jump buttons (311-318, 611-613, 811, 911) includes a given jump button, the apparatus configured to:
receive activation of the given jump button by a user and in response to said activation, and
cause display, on the display screen (111), of the first data column immediately adjacent to the second data column without the intervening columns.

4. The apparatus of claim 1, wherein:
the set of on-screen structured data includes a first data row;
the set of off-screen structured data includes a second data row, the second data row separated, in the data grid (200), from the first data row by a set of intervening rows; and
the set of jump buttons includes a given jump button, the apparatus configured to:
receive activation of the given jump button by a user and in response to said activation, and
cause display, on the display screen (111), of the first data row immediately adjacent to the second data row without the intervening rows.

5. The apparatus of claim 1, wherein the computing processor (154) is configured to respond to activation of the activated jump button by auto-scrolling data across the display screen (111) until the structured data associated with the activated jump button are displayed on-screen.

6. The apparatus of claim 1, wherein the data grid (200) comprises a plurality of cells, and the computing processor is configured to display, in a cell (213203) from the plurality of cells, a jump button (911) from the set of jump buttons.

7. A computer-implemented method of displaying, on a display screen (111), a data grid (200), the method comprising:
receiving (412, 414), from a user, at a user interface (461), inputs to define aspects of a jump button, including specification of the jump button, and the user's specification of structured data to be associated with the specified jump button;
displaying (420), on the display screen (111), on-screen structured data from the data grid (200);
displaying (430), on the display screen (111), of a set of jump buttons (311-318, 611-613, 811, 911), each jump button associated with a corresponding set of off-screen structured data from the data grid (200); and
in response to activation of the jump button, displaying the structured data on-screen.

8. The method of claim 7, wherein the set of jump buttons (311-318, 611-613, 811, 911) includes a given jump button, and the set of off-screen structured data corresponding to the given jump button comprises:
a plurality of grouped off-screen data columns (211-213, 221-223, 231-233, 241-243); and/or
a plurality of grouped off-screen data rows (201-207).

9. The method of claim 7, wherein:
the set of on-screen structured data includes a first data column;
the set of off-screen structured data includes a second data column, the second data column separated, in the data grid (200), from the first data column by a set of intervening columns; and
the set of jump buttons (311-318, 611-613, 811, 911) includes a given jump button, the method further comprising, in response to activation of the given jump button:
displaying, on the display screen (111), the first data column immediately adjacent to the second data column without the intervening columns.

10. The method of claim 7, wherein:
the set of on-screen structured data includes a first data row;
the set of off-screen structured data includes a second data row, the second data row separated, in the data grid (200), from the first data row by a set of intervening rows; and
the set of jump buttons (311-318, 611-613, 811, 911) includes a given jump button, the method further comprising, in response to activation of the given jump button:
displaying, on the display screen (111), the first data row immediately adjacent to the second data row without the intervening rows.

11. The method of claim 7, wherein the on-screen structured data comprises a plurality of cells, and displaying the set of jump buttons comprises displaying, in a cell (213203) from the plurality of cells, at least one jump button (911) from the set of jump buttons.

12. A tangible, computer-readable storage medium in which is non-transitorily stored program code that, when executed by a computing processor (154), provides a method of displaying, on a display screen (111), a data grid (200), the method comprising:
receiving (412, 414), from a user, at a user interface (461), inputs to define aspects of a jump button, including specification of the jump button, and the user's specification of structured data to be associated with the specified jump button;
displaying (420), on the display screen (111), on-screen structured data from the data grid (200);
displaying (430), on the display screen (111), of a set of jump buttons (311-318, 611-613, 811, 911), each jump button associated with a corresponding set of off-screen structured data from the data grid (200); and
in response to activation of the jump button, displaying the structured data on-screen.

13. The tangible, computer-readable storage medium of claim 12, wherein the set of jump buttons (311-318, 611-613, 811, 911) includes a given jump button, and the set of off-screen structured data corresponding to the given jump button comprises:
a plurality of off-screen data columns (211-213, 221-223, 231-233, 241-243);
and/or
a plurality of off-screen data rows (201-207).

14. The tangible, computer-readable storage medium of claim 12, wherein:
the set of on-screen structured data includes a first data column from the data grid (200);
the set of off-screen structured data includes a second data column from the data grid (200), the second data column separated in the data grid (200) from the first data column by a set of intervening columns; and
the set of jump buttons (311-318, 611-613, 811, 911) includes a given jump button, the method further comprising, in response to activation of the given jump button:
displaying, on the display screen (111), the first data column immediately adjacent to the second data column without the intervening columns.

15. The tangible, computer-readable storage medium of claim 12, wherein:
the set of on-screen structured data includes a first data row from the data grid (200);
the set of off-screen structured data includes a second data row from the data grid (200), the second data row separated in the data grid (200) from the first data row by a set of intervening rows; and
the set of jump buttons (311-318, 611-613, 811, 911) includes a given jump button, the method further comprising, in response to activation of the given jump button:
displaying, on the display screen (111), the first data row immediately adjacent to the second data row without the intervening rows.

## Patentansprüche

1. Vorrichtung zum Anzeigen eines Datenrasters (200), wobei die Vorrichtung einen Rechenprozessor (154) umfasst, der kommunikativ mit einem Bildschirm (111) gekoppelt ist, wobei der Rechenprozessor (154) ausgestaltet ist zum:
Empfangen, von einem Benutzer, in einer Benutzerschnittstelle (461):
von Eingaben zum Definieren von Aspekten einer Sprungtaste, einschließlich der Spezifikation der Sprungtaste, und
einer durch den Benutzer festgelegten Spezifikation strukturierter Daten, die mit der spezifizierten Sprungtaste verknüpft werden sollen,
Anzeigen (420), auf dem Bildschirm (111), von strukturierten On-Screen-Daten aus dem Datenraster (200),
Anzeigen (430) eines Satzes von Sprungtasten (311-318, 611-613, 811, 911), wobei jede Sprungtaste mit einem entsprechenden Satz strukturierter Off-Screen-Daten aus dem Datenraster (200) verknüpft ist, und
Reagieren auf eine Aktivierung, durch einen Benutzer, einer Sprungtaste (aktivierte Sprungtaste) aus dem Satz von Sprungtasten (311-318, 611-613, 811, 911) durch Anzeigen, auf dem Bildschirm, des Satzes strukturierter Daten, der mit der aktivierten Sprungtaste verknüpft ist.

2. Vorrichtung nach Anspruch 1, wobei der Satz strukturierter Off-Screen-Daten, der der aktivierten Sprungtaste entspricht, umfasst:
mehrere gruppierte Off-Screen-Datenspalten (211-213, 221-223, 231-233, 241-243), und/oder
mehrere gruppierte Off-Screen-Datenreihen (201-207).

3. Vorrichtung nach Anspruch 1, wobei:
der Satz strukturierter On-Screen-Daten eine erste Datenspalte enthält,
der Satz strukturierter Off-Screen-Daten eine zweite Datenspalte enthält, wobei die zweite Datenspalte in dem Datenraster (200) durch einen Satz dazwischenliegender Spalten von der ersten Datenspalte getrennt ist, und
der Satz von Sprungtasten (311-318, 611-613, 811, 911) eine gegebene Sprungtaste enthält, wobei die Vorrichtung ausgestaltet ist zum:
Empfangen einer Aktivierung der gegebenen Sprungtaste durch einen Benutzer, und in Reaktion auf die Aktivierung,
Veranlassen des Anzeigens, auf dem Bildschirm (111), der ersten Datenspalte unmittelbar neben der zweiten Datenspalte ohne die dazwischenliegenden Spalten.

4. Vorrichtung nach Anspruch 1, wobei:
der Satz strukturierter On-Screen-Daten eine erste Datenreihe enthält,
der Satz strukturierter Off-Screen-Daten eine zweite Datenreihe enthält, wobei die zweite Datenreihe in dem Datenraster (200) durch einen Satz dazwischenliegender Reihen von der ersten Datenreihe getrennt ist, und
der Satz von Sprungtasten eine gegebene Sprungtaste enthält, wobei die Vorrichtung ausgestaltet ist zum:
Empfangen einer Aktivierung der gegebenen Sprungtaste durch einen Benutzer, und in Reaktion auf die Aktivierung,
Veranlassen des Anzeigens, auf dem Bildschirm (111), der ersten Datenreihe unmittelbar neben der zweiten Datenreihe ohne die dazwischenliegenden Reihen.

5. Vorrichtung nach Anspruch 1, wobei der Rechenprozessor (154) ausgestaltet ist zum: Reagieren auf eine Aktivierung der aktivierten Sprungtaste durch automatisches Scrollen von Daten auf dem Bildschirm (111), bis die strukturierten Daten, die mit der aktivierten Sprungtaste verknüpft sind, auf dem Bildschirm angezeigt werden.

6. Vorrichtung nach Anspruch 1, wobei das Datenraster (200) mehrere Zellen umfasst, und wobei der Rechenprozessor ausgestaltet ist zum: Anzeigen, in einer Zelle (213203) der mehreren Zellen, einer Sprungtaste (911) aus dem Satz von Sprungtasten.

7. Computerimplementiertes Verfahren zum Anzeigen, auf einem Bildschirm (111), eines Datenrasters (200), wobei das Verfahren umfasst:
Empfangen (412, 414), von einem Benutzer, in einer Benutzerschnittstelle (461), von Eingaben zum Definieren von Aspekten einer Sprungtaste, einschließlich einer Spezifikation der Sprungtaste, und einer durch den Benutzer festgelegten Spezifikation strukturierter Daten, die mit der spezifizierten Sprungtaste verknüpft werden sollen,
Anzeigen (420), auf dem Bildschirm (111), von strukturierten On-Screen-Daten aus dem Datenraster (200),
Anzeigen (430), auf dem Bildschirm (111), eines Satzes von Sprungtasten (SUSIS, 611-613, 811, 911), wobei jede Sprungtaste mit einem entsprechenden Satz strukturierter Off-Screen-Daten aus dem Datenraster (200) verknüpft ist, und
in Reaktion auf die Aktivierung der Sprungtaste, Anzeigen der strukturierten Daten auf dem Bildschirm.

8. Verfahren nach Anspruch 7, wobei der Satz von Sprungtasten (311-318, 611-613, 811, 911) eine gegebene Sprungtaste enthält und der Satz strukturierter Off-Screen-Daten, der der gegebenen Sprungtaste entspricht, umfasst:
mehrere gruppierte Off-Screen-Datenspalten (211-213, 221-223, 231-233, 241-243), und/oder
mehrere gruppierte Off-Screen-Datenreihen (201-207).

9. Verfahren nach Anspruch 7, wobei:
der Satz strukturierter On-Screen-Daten eine erste Datenspalte enthält,
der Satz strukturierter Off-Screen-Daten eine zweite Datenspalte enthält, wobei die zweite Datenspalte in dem Datenraster (200) durch einen Satz dazwischenliegender Spalten von der ersten Datenspalte getrennt ist, und
der Satz von Sprungtasten (311-318, 611-613, 811, 911) eine gegebene Sprungtaste enthält, wobei das Verfahren, in Reaktion auf die Aktivierung der gegebenen Sprungtaste, ferner umfasst:
Anzeigen, auf dem Bildschirm (111), der ersten Datenspalte unmittelbar neben der zweiten Datenspalte ohne die dazwischenliegenden Spalten.

10. Verfahren nach Anspruch 7, wobei:
der Satz strukturierter On-Screen-Daten eine erste Datenreihe enthält,
der Satz strukturierter Off-Screen-Daten eine zweite Datenreihe enthält, wobei die zweite Datenreihe in dem Datenraster (200) durch einen Satz dazwischenliegender Reihen von der ersten Datenreihe getrennt ist, und
der Satz von Sprungtasten (311-318, 611-613, 811, 911) eine gegebene Sprungtaste enthält, wobei das Verfahren, in Reaktion auf die Aktivierung der gegebenen Sprungtaste, ferner umfasst:
Anzeigen, auf dem Bildschirm (111), der ersten Datenreihe unmittelbar neben der zweiten Datenreihe ohne die dazwischenliegenden Reihen.

11. Verfahren nach Anspruch 7, wobei die strukturierten On-Screen-Daten mehrere Zellen umfassen, und wobei das Anzeigen des Satzes von Sprungtasten das Anzeigen, in einer Zelle (213203) der mehreren Zellen, mindestens einer Sprungtaste (911) aus dem Satz von Sprungtasten umfasst.

12. Greifbares, computerlesbares Speichermedium, auf dem nicht-transitorisch Programmcode gespeichert ist, der, wenn er durch einen Rechenprozessor (154) ausgeführt wird, ein Verfahren zum Anzeigen, auf einem Bildschirm (111), eines Datenrasters (200) bereitstellt, wobei das Verfahren umfasst:
Empfangen (412, 414), von einem Benutzer, in einer Benutzerschnittstelle (461), von Eingaben zum Definieren von Aspekten einer Sprungtaste, einschließlich einer Spezifikation der Sprungtaste, und einer durch den Benutzer festgelegten Spezifikation strukturierter Daten, die mit der spezifizierten Sprungtaste verknüpft werden sollen,
Anzeigen (420), auf dem Bildschirm (111), von strukturierten On-Screen-Daten aus dem Datenraster (200),
Anzeigen (430), auf dem Bildschirm (111), eines Satzes von Sprungtasten (311-318, 611-613, 811, 911), wobei jede Sprungtaste mit einem entsprechenden Satz strukturierter Off-Screen-Daten aus dem Datenraster (200) verknüpft ist, und
in Reaktion auf die Aktivierung der Sprungtaste, Anzeigen der strukturierten Daten auf dem Bildschirm.

13. Greifbares, computerlesbares Speichermedium nach Anspruch 12, wobei der Satz von Sprungtasten (311-318, 611-613, 811, 911) eine gegebene Sprungtaste enthält und der Satz strukturierter Off-Screen-Daten, der der gegebenen Sprungtaste entspricht, umfasst:
mehrere Off-Screen-Datenspalten (211-213, 221-223, 231-233, 241-243), und/oder
mehrere Off-Screen-Datenreihen (201-207).

14. Greifbares, computerlesbares Speichermedium nach Anspruch 12, wobei:
der Satz strukturierter On-Screen-Daten eine erste Datenspalte aus dem Datenraster (200) enthält,
der Satz strukturierter Off-Screen-Daten eine zweite Datenspalte aus dem Datenraster (200) enthält, wobei die zweite Datenspalte in dem Datenraster (200) durch einen Satz dazwischenliegender Spalten von der ersten Datenspalte getrennt ist, und
der Satz von Sprungtasten (311-318, 611-613, 811, 911) eine gegebene Sprungtaste enthält, wobei das Verfahren, in Reaktion auf die Aktivierung der gegebenen Sprungtaste, ferner umfasst:
Anzeigen, auf dem Bildschirm (111), der ersten Datenspalte unmittelbar neben der zweiten Datenspalte ohne die dazwischenliegenden Spalten.

15. Greifbares, computerlesbares Speichermedium nach Anspruch 12, wobei:
der Satz strukturierter On-Screen-Daten eine erste Datenreihe aus dem Datenraster (200) enthält,
der Satz strukturierter Off-Screen-Daten eine zweite Datenreihe aus dem Datenraster (200) enthält, wobei die zweite Datenreihe in dem Datenraster (200) durch einen Satz dazwischenliegender Reihen von der ersten Datenreihe getrennt ist, und
der Satz von Sprungtasten (311-318, 611-613, 811, 911) eine gegebene Sprungtaste enthält, wobei das Verfahren, in Reaktion auf die Aktivierung der gegebenen Sprungtaste, ferner umfasst:
Anzeigen, auf dem Bildschirm (111), der ersten Datenreihe unmittelbar neben der zweiten Datenreihe ohne die dazwischenliegenden Reihen.

## Revendications

1. Appareil destiné à afficher une grille de données (200), ledit appareil comprenant un processeur informatique (154) en communication avec un écran d'affichage (111), ledit processeur informatique (154) étant conçu pour :
recevoir (412, 414), en provenance d'un utilisateur et par le biais d'une interface utilisateur (461),
des entrées visant à définir des aspects d'un bouton de saut, y compris une spécification dudit bouton de saut, et
la spécification utilisateur de données structurées à associer au bouton de saut spécifié ;
afficher (420), sur l'écran d'affichage (111), des données structurées à l'écran provenant de ladite grille de données (200) ;
afficher (430) un jeu de boutons de saut (311-318, 611-613, 811, 911), chaque bouton de saut étant associé à un jeu correspondant de données structurées hors écran provenant de ladite grille de données (200) ; et
répondre à l'activation, effectuée par un utilisateur, d'un bouton de saut (bouton de saut activé) appartenant au jeu de boutons de saut (311-318, 611-613, 811, 911) par l'affichage, sur l'écran d'affichage, dudit jeu de données structurées associées audit bouton de saut activé.

2. Appareil selon la revendication 1, dans lequel le jeu de données structurées hors écran correspondant au bouton de saut activé comprend :
une pluralité de colonnes de données hors écran (211-213, 221-223, 231-233, 241-243) groupées, et/ou
une pluralité de lignes de données hors écran (201-207) groupées.

3. Appareil selon la revendication 1, dans lequel :
le jeu de données structurées à l'écran comprend une première colonne de données ;
le jeu de données structurées hors écran comprend une deuxième colonne de données, ladite deuxième colonne de données étant séparée, dans la grille de données (200), de ladite première colonne de données par un ensemble de colonnes intermédiaires ; et
le jeu de boutons de saut (311-318, 611-613, 811, 911) comprend un bouton de saut donné, ledit appareil étant conçu pour :
recevoir l'activation, effectuée par un utilisateur, dudit bouton de saut donné et, en réponse à ladite activation :
causer l'affichage, sur l'écran d'affichage (111), de la première colonne de données immédiatement voisine de la deuxième colonne de données, sans les colonnes intermédiaires.

4. Appareil selon la revendication 1, dans lequel :
le jeu de données structurées à l'écran comprend une première ligne de données ;
le jeu de données structurées hors écran comprend une deuxième ligne de données, ladite deuxième ligne de données étant séparée, dans la grille de données (200), de ladite première ligne de données par un ensemble de lignes intermédiaires ; et
le jeu de boutons de saut comprend un bouton de saut donné, ledit appareil étant conçu pour :
recevoir l'activation, effectuée par un utilisateur, dudit bouton de saut donné et, en réponse à ladite activation :
causer l'affichage, sur l'écran d'affichage (111), de la première ligne de données immédiatement voisine de la deuxième ligne de données, sans les lignes intermédiaires.

5. Appareil selon la revendication 1, dans lequel le processeur informatique (154) est conçu pour répondre à l'activation du bouton de saut activé par le défilement automatique des données sur l'écran d'affichage (111) jusqu'à ce que les données structurées associées au bouton de saut activé soient affichées à l'écran.

6. Appareil selon la revendication 1, dans lequel la grille de données (200) comprend une pluralité de cellules et le processeur informatique est conçu pour afficher, dans une cellule (213203) appartenant à la pluralité de cellules, un bouton de saut (911) appartenant au jeu de boutons de saut.

7. Procédé mis en œuvre par ordinateur afin d'afficher une grille de données (200) sur un écran d'affichage (111), ledit procédé comprenant les étapes consistant à :
recevoir (412, 414), en provenance d'un utilisateur et par le biais d'une interface utilisateur (461), des entrées visant à définir des aspects d'un bouton de saut, y compris une spécification dudit bouton de saut, et la spécification utilisateur de données structurées à associer audit bouton de saut ;
afficher (420), sur l'écran d'affichage (111), des données structurées à l'écran provenant de ladite grille de données (200) ;
afficher (430), sur l'écran d'affichage (111), un jeu de boutons de saut (311-318, 611-613, 811, 911), chaque bouton de saut étant associé à un jeu correspondant de données structurées hors écran provenant de ladite grille de données (200) ; et
en réponse à l'activation du bouton de saut, afficher les données structurées à l'écran.

8. Procédé selon la revendication 7, dans lequel le jeu de boutons de saut (311-318, 611-613, 811, 911) comprend un bouton de saut donné, et le jeu de données structurées hors écran correspondant audit bouton de saut donné comprend :
une pluralité de colonnes de données hors écran (211-213, 221-223, 231-233, 241-243) groupées, et/ou
une pluralité de lignes de données hors écran (201-207) groupées.

9. Procédé selon la revendication 7, dans lequel :
le jeu de données structurées à l'écran comprend une première colonne de données ;
le jeu de données structurées hors écran comprend une deuxième colonne de données, ladite deuxième colonne de données étant séparée, dans la grille de données (200), de ladite première colonne de données par un ensemble de colonnes intermédiaires ; et
le jeu de boutons de saut (311-318, 611-613, 811, 911) comprend un bouton de saut donné, ledit procédé comprenant en outre l'étape suivante, effectuée en réponse à l'activation dudit bouton de saut donné et consistant à :
afficher, sur l'écran d'affichage (111), la première colonne de données immédiatement voisine de la deuxième colonne de données, sans les colonnes intermédiaires.

10. Procédé selon la revendication 7, dans lequel :
le jeu de données structurées à l'écran comprend une première ligne de données ;
le jeu de données structurées hors écran comprend une deuxième ligne de données, ladite deuxième ligne de données étant séparée, dans la grille de données (200), de ladite première ligne de données par un ensemble de lignes intermédiaires ; et
le jeu de boutons de saut (311-318, 611-613, 811, 911) comprend un bouton de saut donné, ledit procédé comprenant en outre l'étape suivante, effectuée en réponse à l'activation dudit bouton de saut donné et consistant à :
afficher, sur l'écran d'affichage (111), la première ligne de données immédiatement voisine de la deuxième ligne de données, sans les lignes intermédiaires.

11. Procédé selon la revendication 7, dans lequel les données structurées à l'écran comprennent une pluralité de cellules, et l'affichage du jeu de boutons de saut comprend l'affichage, dans une cellule (213203) appartenant à la pluralité de cellules, d'au moins un bouton de saut (911) appartenant au jeu de boutons de saut.

12. Support tangible et lisible par un ordinateur sur lequel est enregistré de manière non transitoire un code de programme qui, lorsqu'il est exécuté par un processeur informatique (154), fournit un procédé d'affichage d'une grille de données (200) sur un écran d'affichage (111), ledit procédé comprenant les étapes consistant à :
recevoir (412, 414), en provenance d'un utilisateur et par le biais d'une interface utilisateur (461), des entrées visant à définir des aspects d'un bouton de saut, y compris une spécification dudit bouton de saut, et la spécification utilisateur de données structurées à associer audit bouton de saut spécifié ;
afficher (420), sur l'écran d'affichage (111), des données structurées à l'écran provenant de ladite grille de données (200) ;
afficher (430), sur l'écran d'affichage (111), un jeu de boutons de saut (311-318, 611-613, 811, 911), chaque bouton de saut étant associé à un jeu correspondant de données structurées hors écran provenant de ladite grille de données (200) ; et
en réponse à l'activation dudit bouton de saut, afficher les données structurées à l'écran.

13. Support tangible et lisible par un ordinateur selon la revendication 12, dans lequel le jeu de boutons de saut (311-318, 611-613, 811, 911) comprend un bouton de saut donné, et le jeu de données structurées hors écran correspondant au bouton de saut donné comprend :
une pluralité de colonnes de données hors écran (211-213, 221-223, 231-233, 241-243), et/ou
une pluralité de lignes de données hors écran (201-207).

14. Support tangible et lisible par un ordinateur selon la revendication 12, dans lequel :
le jeu de données structurées à l'écran comprend une première colonne de données appartenant à la grille de données (200) ;
le jeu de données structurées hors écran comprend une deuxième colonne de données appartenant à la grille de données (200), ladite deuxième colonne de données étant séparée, dans la grille de données (200), de ladite première colonne de données par un ensemble de colonnes intermédiaires ; et
le jeu de boutons de saut (311-318, 611-613, 811, 911) comprend un bouton de saut donné, ledit procédé comprenant en outre l'étape suivante, effectuée en réponse à l'activation dudit bouton de saut donné et consistant à :
afficher, sur l'écran d'affichage (111), la première colonne de données immédiatement voisine de la deuxième colonne de données, sans les colonnes intermédiaires.

15. Support tangible et lisible par un ordinateur selon la revendication 12, dans lequel :
le jeu de données structurées à l'écran comprend une première ligne de données appartenant à la grille de données (200) ;
le jeu de données structurées hors écran comprend une deuxième ligne de données appartenant à la grille de données (200), ladite deuxième ligne de données étant séparée, dans la grille de données (200), de ladite première ligne de données par un ensemble de lignes intermédiaires ; et
le jeu de boutons de saut (311-318, 611-613, 811, 911) comprend un bouton de saut donné, ledit procédé comprenant en outre l'étape suivante, effectuée en réponse à l'activation dudit bouton de saut donné et consistant à :
afficher, sur l'écran d'affichage (111), la première ligne de données immédiatement voisine de la deuxième ligne de données, sans les lignes intermédiaires.
